# EUROPÄISCHE PATENTSCHRIFT

(11) **EP 0 669 240 B1**
(45) Veröffentlichungstag und Bekanntmachung des Hinweises auf die Patenterteilung: **22.09.1999**
(21) Anmeldenummer: 95102058.5
(22) Anmeldetag: 15.02.1995
(51) Int. Cl.: B60T 13/16, B60T 11/224, B60T 11/21

(54) **Zweistufiges Bremsventil und Bremsanordnung**
Two stage brake valve and brake arrangement
Valve de freinage à deux étages et installation de freinage

(30) Priorität: 25.02.1994 US 201549
(43) Veröffentlichungstag der Anmeldung: 30.08.1995
(73) Patentinhaber: Deere & Company, Moline, Illinois 61265-8098 (US)
(72) Erfinder: Durant, Douglas Michael, Waterloo, Iowa 50701 (US); Delfs, Larry Marvin, Cedar Falls, Iowa 50613 (US); Eagles, Derek Malcolm, Cedar Falls, Iowa 50613 (US)
(74) Vertreter: Feldmann, Bernhard

(56) Entgegenhaltungen:
- GB-A- 2 078 325
- US-A- 3 764 183
- US-A- 4 464 899
- US-A- 4 738 109

## Beschreibung

Die Erfindung betrifft ein zweistufiges Bremsventil zur Versorgung wenigstens eines Bremsmechanismus mit Flüssigkeitsdruck. Es hat zwei Querschnittsstufen, deren Wirkquerschnitte einer Vorfüllkammer mit großem Querschnitt und einer Hochdruckkammer zugeordnet sind. Die beiden Querschnittsstufen werden beim Bremsen nacheinander wirksam. Das Bremsventil enthält einen Einlaß, der zur Unterstützung des Vorfüllens des Bremsmechanismus mit einer Druckquelle verbunden werden kann, und einen Vorratsbehälteranschluß, der der Verbindung mit einem Vorratsbehälter dient. Desweiteren ist ein Vorfüllablaßventil vorgesehen, das die Vorfüllkammer mit dem Vorratsbehälter verbindet, wenn Pumpendruck an dem Einlaß ansteht. Die Erfindung bezieht sich ferner auf eine Bremsanordnung, die ein rechtes und ein linkes zweistufiges Bremsventil der genannten Art enthält.

Ein gattungsbildendes Bremsventil ist aus der US-A-3,764,183 bekannt. Dort steht die Vorfüllkammer mit dem Vorratsbehälter über ein Ventil in Verbindung, dessen Ventilteil eine Dichtscheibe enthält, die durch eine Feder auf einen Ventilsitz gedrückt wird. An der Dichtscheibe ist ein vorstehender Dorn befestigt. Der Dorn ragt in den Eingriffsbereich eines Kragens, der durch einen dem Druck am Einlaß ausgesetzten Kolben verschiebbar ist. Steht Druck am Einlaß an, so bewegt der Kolben den Kragen gegen den Dorn, welcher die Dichtscheibe von dem Ventilsitz abhebt.

Die US-A-4,738,109 beschreibt ein gattungsgemäßes zweistufiges Bremsventil, welches auch dann funktionsfähig ist, wenn kein Pumpendruck an dem Pumpeneinlaß des Bremsventils anliegt. Dies wird durch eine zweistufige Ventilanordnung erreicht, die einen Vorfüllkolben und einen Hochdruckkolben enthält. Der Vorfüllkolben liefert ein großes Ölvolumen bei kleinem Hydraulikdruck, das erforderlich ist, um die Komponenten der Hinterachsbremse zur Anlage zu bringen. Wenn dies geschehen ist, geht das Bremsventil von dem großen Vorfüllkolbendurchmesser auf einen kleinen Hochdruckkolbendurchmesser über, mit dem der für das Bremsen erforderliche höhere Druck erzeugt wird.

Wenn Pumpendruck an dem Pumpeneinlaß des Bremsventils anliegt, ist bei der Betätigung des Bremsventils (Vorfüllkolben/Hochdruckkolben) lediglich ein kleiner Betätigungsweg zwischen der Neutralstellung und der Druckaufbaustellung, in der der Bremsmechanismus gefüllt wird, erforderlich. Während dieses Betätigungsweges wird jedoch Flüssigkeit in der Vorfüllkammer eingeschlossen, so daß sich ein Druck ausbildet, der ein schweres Pedalgefühl verursacht. Das schwere, auf die Druckdämpfung der Vorfüllkammer zurückzuführende, Pedalgefühl und die damit verbundene Erhöhung der für das Anlegen des Bremsmechanismus erforderlichen Pedalkraft führen zu einer Verschlechterung der Regulierbarkeit des Bremsdrucks. Das schwere Pedalgefühl ist bei kalten Witterungsbedingungen wegen der dann vorliegenden erhöhten Druckdämpfung stärker spürbar.

Die der Erfindung zugrunde liegende Aufgabe wird darin gesehen, ein Bremsventil und eine Bremsanordnung anzugeben, durch die die genannten Probleme und Nachteile überwunden werden. Insbesondere soll das schwere Pedalgefühl beim Umschalten zwischen den beiden Querschnittsstufen vermieden werden. Ferner soll es bei einseitiger Bremsbetätigung auch möglich sein, die Trennung zwischen dem linksseitigen Bremsventil und dem rechtsseitigen Bremsventilteil aufrecht zu erhalten.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das eingangs genannte zweistufige Bremsventil enthält erfindungsgemäß ein Vorfüllablaßventil. Dieses verbindet die Vorfüllkammer mit dem Vorratsbehälter nur dann, wenn Pumpendruck an dem Einlaß ansteht. Bei einer Bremsanordnung mit einem linken und einem rechten Bremsventil schließt das Vorfüllablaßventil eine Verbindung zwischen der Vorfüllkammer des linken Bremsventils und der Vorfüllkammer des rechten Bremsventils sowie eine Verbindung zwischen den beiden Vorfüllkammern und einem Vorratsbehälter, sofern kein Pumpendruck an dem Einlaß ansteht. Das Vorfüllablaßventil enthält vorzugsweise ein 3-Wege/2-Positionen-Schieberventil.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Querschnitt durch ein zweistufiges Bremsventil,
- Fig. 2: einen Teilschnitt entlang der Linie 2 - 2 der Fig. 1,
- Fig. 3: einen Teilschnitt entlang der Linie 3 - 3 der Fig. 2 und
- Fig. 4: eine Teilansicht der Fig. 3, bei der sich das Vorfüllventil in einer anderen Position befindet.

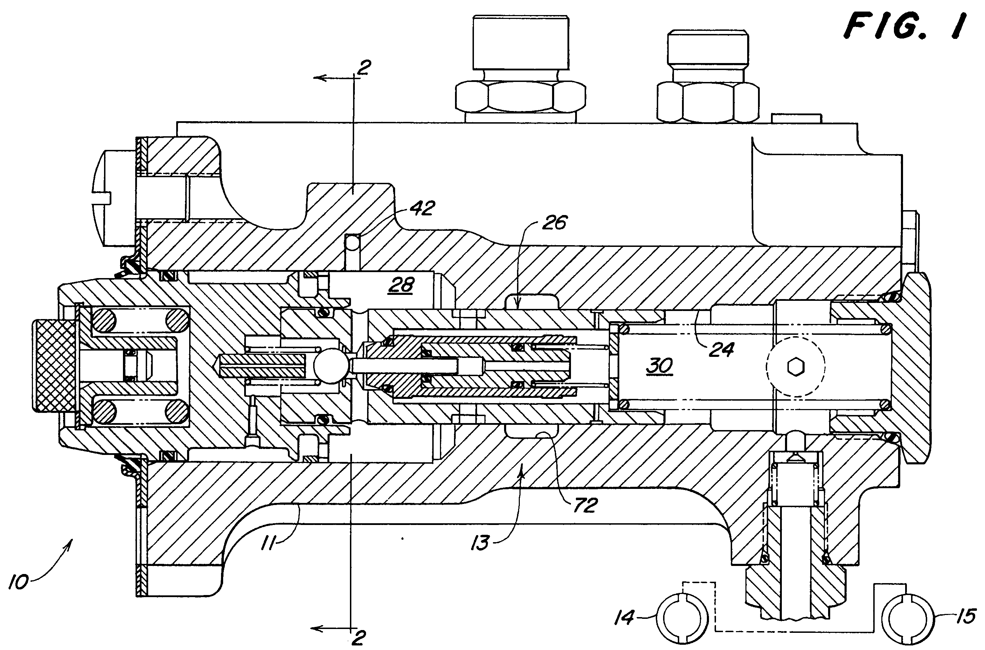

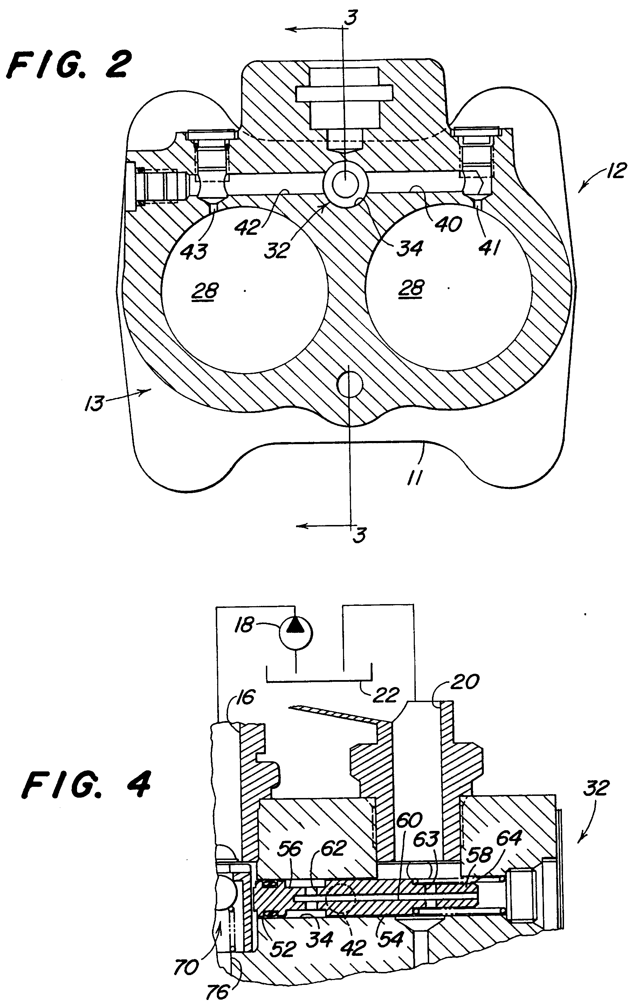

In Fig. 1 ist eine Seite eines doppelseitigen zweistufigen Bremsventils 10 dargestellt, dessen Gehäuse 11, wie in Fig. 2 angedeutet, ein linkes zweistufiges Bremsventil 12 und ein rechtes zweistufiges Bremsventil 13 einschließt. Die Bremsventile 12, 13 geben Flüssigkeitsdruck an rechte und linke Bremsmechanismen 14, 15 ab. Jedes Bremsventil 12, 13 hat einen Einlaß 16, durch den es unter Druck stehende Bremsflüssigkeit von einer Pumpe 18 erhält, einen Vorratsbehälteranschluß 20, über den es mit einem Vorratsbehälter 22 in Verbindung steht, eine Stufenbohrung 24 und einen Stufenkolben 26. Die Stufenbohrung 24 und der Stufenkolben 26 bilden eine Vorfüllkammer 28 mit großem Volumen und eine Hochdruckkammer 30. Die hier beschriebene Ausbildung ist konventionell und ähnelt der in der US-A-4,738,109 beschriebenen.

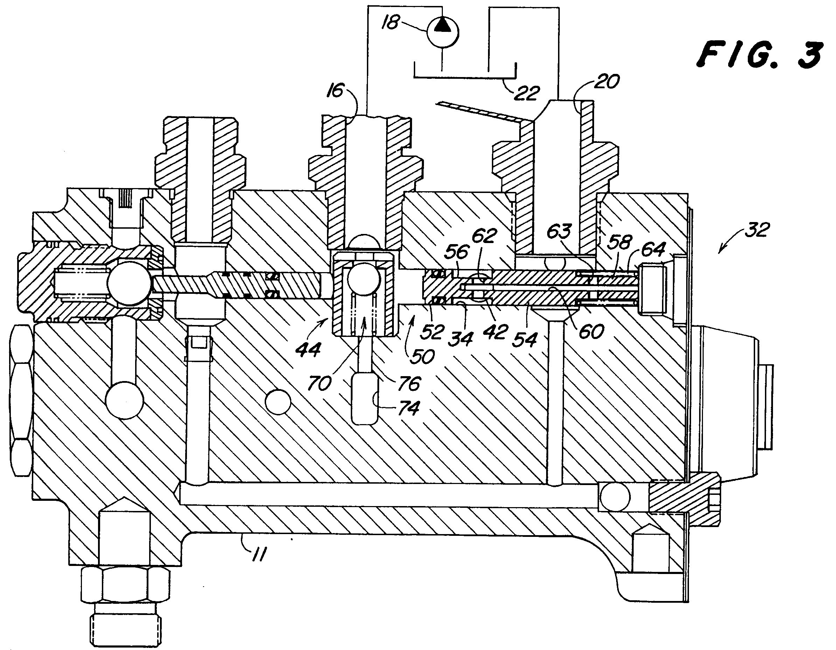

Entsprechend der vorliegenden Erfindung enthält das Bremsventil ein Vorfüllablaßventil 32. Dieses Vorfüllablaßventil 32 verbindet die Vorfüllkammer 28 mit dem Vorratsbehälter 20 nur dann, wenn der Einlaßbereich unter Druck steht. Das Vorfüllablaßventil 32 enthält vorzugsweise ein 3-Wege/2-Positionen-Schieberventil. Wie am besten aus Fig. 2 und 3 ersichtlich, ist in das Gehäuse 11 zwischen dem rechten und dem linken Bremsventil 12 und 13 eine Vorfüllablaßventilbohrung 34 eingelassen. Über den Einlaß 16 ist die Pumpe 18 mit der Bohrung 34 verbunden. Über den Vorratsbehälteranschluß 20 ist die Bohrung 34 mit dem Vorratsbehälter 22 verbunden. Wie aus Fig. 2 ersichtlich, verbinden die Durchgänge 40, 41 die Bohrung 34 mit der linken Vorfüllkammer 28 und die Durchgänge 42, 43 die Bohrung 34 mit der rechten Vorfüllkammer 28.

Die Bohrung 34 nimmt ein verschiebbares Ventilteil 50 auf. Das Ventilteil 50 enthält eine erste Ringschulter 52 mit einer O-Ring-Dichtung, eine zweite Ringschulter 54, die durch eine ringförmige Nut 56 von der ersten Ringschulter 52 getrennt ist, und einen Schaft 58, der von der zweiten Ringschulter 54 axial absteht. Das axiale Ende des Ventilteils 50 ist im Bereich der ersten Ringschulter 52 dem Druck der Einlaßöffnung 16 ausgesetzt. Von einer Stelle des Ventilteils 50 aus, die im axialen Bereich der Nut 56 liegt, erstreckt sich eine mittlere axiale Sackbohrung 60 durch die zweite Ringschulter 54 und den Schaft 58 hindurch und tritt aus der schaftseitigen Stirnseite des Ventilteils 50 aus diesem aus. Eine radiale Bohrung 62 verbindet die Nut 56 mit der Sackbohrung 60. Eine radiale Bohrung 63 verbindet die Sackbohrung 60 mit dem Vorratsbehälteranschluß 20. Eine Feder 64 umgibt den Schaft 58 und greift an der Ringschulter 54 an. Sie ist vorgespannt, um das Ventilteil 50 in die in Fig. 4 dargestellte Lage zu drücken, in der durch die zweite Ringschulter 54 die Verbindung zwischen der Querbohrung 40 bzw. 42 und der Bohrung 34 verschlossen wird, so daß eine Verbindung zwischen der Vorfüllkammer 28 und dem Vorratsbehälter 22 unterbrochen wird. In dieser Position ist auch die Verbindung zwischen den beiden Querbohrungen 40 und 42 unterbrochen, so daß die rechte und die linke Vorfüllkammer voneinander getrennt sind. Dies beugt einer Abschwächung bei der manuellen Betätigung eines der Bremsventile (links oder rechts) vor, sofern diese unabhängig voneinander betätigt werden. Wenn der Einlaß 16 unter Druck steht, bewegt sich das Ventilteil 50 in die in Fig. 3 dargestellte Lage und verbindet über den Durchgang 42, die radiale Bohrung 62, die axiale Bohrung 60, die radiale Bohrung 63 und den Anschluß 20 die Vorfüllkammer 28 mit dem Vorratsbehälter 22.

Ein im Einlaß 16 angeordnetes Rückschlagventil 70 steht über die Durchgänge 74 und 76 mit den ringförmigen Nuten 72 der beiden Bremsventile 12 und 13 in Verbindung. Das Rückschlagventil 70 schließt, wenn kein Pumpendruck ansteht. Hierdurch wird verhindert, daß Bremsflüssigkeit von der Hochdruckkammer 30 über die Nut 72 abfließt, wenn Bremsdruck in der Hochdruckkammer 30 erzeugt wird, indem die Bedienungsperson auf den Stufenkolben 26 eine Kraft ausübt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen, soweit sie im Rahmen der Patentansprüche liegen.

## Patentansprüche

1. Zweistufiges Bremsventil zur Versorgung wenigstens eines Bremsmechanismus (14, 15) mit Flüssigkeitsdruck mit zwei Querschnittsstufen, deren Wirkquerschnitte einer Vorfüllkammer (28) mit großem Querschnitt und einer Hochdruckkammer (30) zugeordnet sind, die beim Bremsen nacheinander wirksam werden, wobei das Bremsventil einen Einlaß (16), der zur Unterstützung des Vorfüllens des Bremsmechanismus (14, 15) mit einer Druckquelle (18) in Verbindung steht, einen Vorratsbehälteranschluß (20) und ein Vorfüllablaßventil (32) enthält, das die Vorfüllkammer (28) mit dem Vorratsbehälter (22) verbindet, wenn Pumpendruck an dem Einlaß (16) ansteht, gekennzeichnet durch ein Vorfüllventil (32) mit:
- einer in dem Ventilgehäuse (11) ausgebildeten Ventilbohrung (34),
- einem Einlaßkanal, über den Flüssigkeitsdruck von dem Einlaß (16) zu einem Einlaßende der Ventilbohrung (34) geleitet wird,
- einem Vorfüllkanal (40, 42), der die Vorfüllkammer (28) mit der Ventilbohrung (34) verbindet,
- einem Ablaßkanal, der den Vorratsbehälter (22) mit der Ventilbohrung (34) verbindet,
- einem verschiebbar in der Ventilbohrung (34) angeordneten Ventilteil (50), welches eine erste und eine zweite Ringschulter (52, 54) aufweist, die durch eine ringförmige Nut (56) von einander getrennt sind, wobei die erste Ringschulter (52) dem Flüssigkeitsdruck am Einlaßende der Ventilbohrung (34) ausgesetzt ist, und wobei sich ein Ventildurchgang (62, 60, 63) durch das Ventilteil (50) erstreckt, der die Nut (56) mit einer von der ersten Ringschulter (52) abgekehrten Seite der zweiten Ringschulter (54) verbindet, und
- einer Feder (64), die an dem Ventilteil (50) angreift und, sofern kein Pumpendruck an dem Einlaß (16) ansteht, das Ventilteil (50) in eine Lage drängt, in der die zweite Ringschulter (54) den Vorfüllkanal (40, 42) absperrt und die Verbindung zwischen dem Vorfüllkanal (40, 42) und dem Ablaßkanal verschließt, und die für den Fall, daß Pumpendruck an dem Einlaß (16) ansteht, eine Bewegung des Ventilteils (50) gegen die Federkraft zuläßt, bei der über die Nut (56), den Ventildurchgang (62, 60, 63) und einen Abschnitt der Ventilbohrung (34) eine Verbindung zwischen dem Vorfüllkanal (40, 42) und dem Ablaßkanal geöffnet wird.

2. Bremsventil nach Anspruch 1, dadurch gekennzeichnet, daß das Ventilteil (50) einen von der zweiten Ringschulter (54) abstehenden Schaft (58) aufweist, daß sich der Ventildurchgang durch das Ventilteil (50) und den Schaft (58) erstreckt und die Nut (56) mit einer Öffnung (63) an einem Ende des Schaftes (58) verbindet, und daß der Schaft (58) die Feder (64) abstützt.

3. Bremsventil nach Anspruch 1 oder 2, dadurch gekennzeichnet, daß der Ventildurchgang eine axial in dem Ventilteil (50) verlaufende und sich durch die zweite Ringschulter (54), und gegebenenfalls durch den Schaft (58), erstreckende Sackbohrung (60) enthält, die durch eine Radialbohrung (62) mit der Nut (56) in Verbindung steht.

4. Bremsventil nach einem der Ansprüche 1 bis 3, dadurch gekennzeichnet, daß zur Ausbildung der Querschnittsstufen, der Vorfüllkammer (28) und der Hochdruckkammer (30) das Ventilgehäuse (11) eine Stufenbohrung (24) enthält, die einen Stufenkolben aufnimmt.

5. Bremsanordnung mit einem linken und einem rechten zweistufigen Bremsventil (12, 13), die nach einem der Ansprüche 1 bis 4 ausgebildet sind und der Übertragung von Flüssigkeitsdruck an einen linken bzw. rechten Bremsmechanismus (14, 15) dienen, dadurch gekennzeichnet, daß ein Vorfüllablaßventil (32) vorgesehen ist, das die Vorfüllkammern (28) der beiden Bremsventile (12, 13) mit dem Vorratsbehälter (22) nur dann verbindet, wenn Pumpendruck an dem Einlaß (16) ansteht.

6. Bremsanordnung nach Anspruch 5, dadurch gekennzeichnet, daß ein Vorfüllventil (32) vorgesehen ist, mit einer in dem Bremsanordnungsgehäuse (11) ausgebildeten Ventilbohrung (34), in die auf einer Seite ein linker Vorfüllkanal (40) endet, der mit der Vorfüllkammer (28) des linken Bremsventils (12) verbunden ist, und in die auf einer anderen Seite ein rechter Vorfüllkanal (42) endet, der mit der Vorfüllkammer (28) des rechten Bremsventils (12) verbunden ist, und daß die beiden Vorfüllkanäle (40, 42) durch ein in der Ventilbohrung (34) verschiebbares Ventilteil (50) verschlossen werden, wenn kein Pumpendruck vorliegt.

7. Bremsanordnung nach Anspruch 5 oder 6, dadurch gekennzeichnet, daß das Vorfüllablaßventil (32) eine Verbindung zwischen den Vorfüllkammern (28) sowie eine Verbindungen zwischen den Vorfüllkammern (28) und dem Vorratsbehälter (22) verschließt, wenn kein Pumpendruck am Einlaß (16) ansteht.

## Claims

1. A two stage brake valve for supplying at least one brake mechanism (14, 15) with fluid pressure, with two cross-sectional stages, with which are associated effective cross-sections of a pre-filling chamber (28) with a large cross-section and a high pressure chamber (30), which act one after the other when braking, wherein the brake valve has an inlet (16), which is connected to a pressure source (18) to assist the pre-filling of the brake mechanism (14, 15), a reservoir connection (20) and a pre-filling drain valve (32) which connects the pre-filling chamber (28) with the reservoir (22) when pump pressure is present on the inlet, characterized by a pre-filling valve (32) with:
- a valve bore (34) formed in the valve housing (11),
- an inlet channel through which fluid pressure is communicated from the inlet (16) to an inlet end of the valve bore (34),
- a pre-filling channel (40, 42) which connects the pre-filling chamber (28) to the valve bore (34),
- a drain channel which connects the reservoir (22) to the valve bore (34),
- a valve body (50) which is slidably arranged in the valve bore (34) and comprises first and second annular lands (52, 54), which are separated from one another by an annular groove (56), wherein the first annular land (52) is subjected to the fluid pressure at the inlet end of the valve bore (34) and wherein a valve passage (62, 60, 63) extends through the valve body (50) and connects the groove (56) to a side of the second annular land (54) facing away from the first annular land (52), and
- a spring (64) which acts on the valve body (50) and, insofar as no pump pressure is present at the inlet (16), biases the valve body (50) into a position in which the second annular land (54) shuts off the pre-filling channel (40, 42) and closes the connection between the pre-filling channel (40, 42) and the drain channel, and which allows movement of the valve body (50) against the spring force when pump pressure is present at the inlet (16), whereby a connection between the pre-filling channel (40, 42) and the drain channel is opened via the groove (56), the valve passage (62, 60, 63) and a section of the valve bore (34).

2. A brake valve according to claim 1, characterized in that the valve body (50) comprises a stem (58) projecting from the second annular land (54), in that the valve passage extends through the valve body (50) and the stem (58) and connects the groove (56) to an opening (63) at one end of the stem (58) and in that the stem (58) supports the spring (64).

3. A brake valve according to claim 1 or 2, characterized in that the valve passage includes a blind bore (60) extending axially in the valve body (50) and through the second annular land (54) and optionally through the stem (58), and which is connected through a radial bore (62) to the groove (56).

4. A brake valve according to any of claims 1 to 3, characterized in that the valve housing (11) has a stepped bore (24), which receives a stepped piston, in order to form the cross-sectional stages of the pre-filling chamber (28) and the high pressure chamber (30).

5. A brake arrangement with left and right two stage brake valves (12, 13), which are formed in accordance with one of claims 1 to 4 and which serve to transmit fluid pressure to left and right brake mechanisms (14, 15) respectively, characterized in that there is provided a pre-filling drain valve (32) which connects the pre-filling chambers (28) of the two brake valves (12, 13) to the reservoir (22) only when pump pressure is present on the inlet (16).

6. A brake arrangement according to claim 5, characterized in that a pre-filling valve (32) is provided, with a valve bore (34) formed in the brake arrangement housing (11), in which a left pre-filling channel (40), which is connected to the pre-filling chamber (28) of the left brake valve (12), terminates on one side, and in which a right pre-filling channel (42), which is connected to the pre-filling chamber (28) of the right brake valve (12), terminates on another side, and in that the two pre-filling channels (40, 42) are closed by a valve body (50) which can shift in the valve bore (34), when no pump pressure is present.

7. A brake arrangement according to claim 5 or 6, characterized in that the pre-filling drain valve (32) closes a connection between the pre-filling chambers (28) and also a connection between the pre-filling chambers (28) and the reservoir (22) when there is no pump pressure on the inlet (16).

## Revendications

1. Soupape de frein à deux étages servant à alimenter au moins un mécanisme de freinage (14, 15) avec une pression d'un liquide, comportant deux échelons de section transversale, dont les sections transversales actives sont associées à une chambre de préremplissage (28) possédant une section transversale étendue et une chambre à haute pression (30), cette chambre étant active successivement lors du freinage, la soupape de frein comportant une entrée (16), qui est reliée à une source de pression (18) pour faciliter le préremplissage du mécanisme de freinage (14, 15), un raccord (20) de réservoir et une soupape de vidage pour le préremplissage (32), qui relie la chambre de préremplissage (28) au réservoir (22), lorsqu'une pression de pompe est appliquée à l'entrée (16), caractérisée par une soupape de préremplissage (32) comportant :
- un perçage de soupape (34) formé dans le boîtier de soupape (11),
- un canal d'entrée, au moyen duquel la pression du liquide est envoyée depuis l'entrée (16) jusqu'à une extrémité d'entrée du perçage de soupape (34),
- un canal de préremplissage (40, 42), qui relie la chambre de préremplissage (28) au perçage de soupape (34),
- un canal d'évacuation, qui relie le réservoir (22) au perçage de soupape (34),
- une partie de soupape (50), qui est disposée de manière à être déplaçable dans le perçage de soupape (34) et possède des premier et second épaulements annulaires (52, 54) qui sont séparés l'un de l'autre par une gorge annulaire (56), le premier épaulement annulaire (52) étant soumis à la pression du liquide au niveau de l'extrémité d'entrée du perçage de soupape (34), tandis qu'un passage de soupape (62, 60, 64) traverse la partie de soupape (50) en reliant la gorge (56) à un côté, situé à l'opposé du premier épaulement annulaire (52), du second épaulement annulaire (54), et
- un ressort (64), qui est accroché à la partie de soupape (50) et, dans la mesure où aucune pression de pompage n'est appliquée à l'entrée (16), repousse la partie de soupape (50) dans une position dans laquelle le second épaulement annulaire (54) bloque le canal de préremplissage (40, 42) et ferme la liaison entre le canal de préremplissage (40, 42) et le canal d'évacuation, et qui permet, dans le cas où une pression de pompage est présente au niveau de l'entrée (16), un déplacement de la partie de soupape (50) à l'encontre de la force du ressort, lors duquel une liaison entre le canal de préremplissage (40, 42) et le canal d'évacuation est ouverte par l'intermédiaire de la gorge (56), du passage de soupape (62, 60, 63) et d'une section du perçage de soupape (34).

2. Soupape de frein selon la revendication 1, caractérisée en ce que la partie de soupape (50) possède une tige (58), qui fait saillie à partir du second épaulement annulaire (54), que le passage de soupape traverse la partie de soupape (50) et la tige (58) et relie la gorge (56) à une ouverture (63) située dans une extrémité de la tige (58) et que la tige (58) supporte le ressort (64).

3. Soupape de frein selon la revendication 1 ou 2, caractérisée en ce que le passage de soupape contient un perçage borgne (60), qui s'étend axialement dans la partie de soupape (50) et traverse le second épaulement annulaire (54) et éventuellement la tige (58) et qui est relié à la gorge (56) par un perçage radial (62).

4. Soupape de frein selon l'une des revendications 1 à 3, caractérisée en ce que pour la formation des échelons de section transversale, de la chambre de préremplissage (28) et de la chambre à haute pression (30), le boîtier de soupape (11) comporte un perçage étagé (24), qui loge un piston étagé.

5. Dispositif de freinage comportant une soupape de frein à deux étages de gauche et une soupape de frein à deux étages de droite (12, 13), qui sont agencées selon l'une des revendications 1 à 4 et servent à transmettre la pression d'un liquide à un mécanisme de freinage de gauche ou à un mécanisme de freinage de droite (14, 15), caractérisé en ce qu'il est prévu une soupape de vidage pour le préremplissage (32), qui relie les chambres de préremplissage (28) des deux soupapes de frein (12, 13) au réservoir (22) uniquement lorsque la pression de pompage est appliquée à l'entrée (16).

6. Dispositif de freinage selon la revendication 5, caractérisé en ce qu'il est prévu une soupape de préremplissage (32), comportant un perçage de soupape (34), qui est formé dans le boîtier (11) du dispositif de soupape et dans lequel se termine, d'un côté, un canal de préremplissage de gauche (40) qui est relié à la chambre de préremplissage (28) de la soupape de frein de gauche (12), et dans lequel se termine, d'un autre côté, un canal de préremplissage de droite (42), qui est relié à la chambre de préremplissage (28) de la soupape de frein de droite (13), et que les deux canaux de préremplissage (40, 42) sont fermés par une partie de soupape (50), qui est déplaçable dans le perçage de soupape (34), lorsqu'aucune pression de pompage n'est présente.

7. Dispositif de freinage selon la revendication 5 ou 6, caractérisé en ce que la soupape de vidage pour le préremplissage (32) ferme une liaison entre les chambres de préremplissage (28) ainsi qu'une liaison entre les chambres de préremplissage (28) et le réservoir (22), lorsqu'aucune pression de pompage n'est présente au niveau de l'entrée (16).
